# EUROPEAN PATENT APPLICATION

(11) **EP 3 059 911 A1**
(43) Date of publication of application: **24.08.2016**
(21) Application number: 15155420.1
(22) Date of filing: 17.02.2015
(51) Int. Cl.: H04L 12/725, H04L 29/06

(54) **A router**

(71) Applicant: Koninklijke KPN N.V., 2516 CK The Hague (NL)
(72) Inventor: van Steenbergen, Ate, 9737 NN Groningen (NL)
(74) Representative: Wuyts, Koenraad Maria

(57) **Abstract**

A routing device is described for forwarding a plurality of data packets, and comprising a first management structure for forwarding the plurality of data packets via a first set of forwarding rules, a second management structure for forwarding the plurality of data packets via a second set of forwarding rules. The routing device is arranged to receive a data packet for forwarding, and forward the data packet according to both the first and second forwarding rules. The forwarding rules may be comprised in either one or two forwarding tables. A splitter, or other copying device may be used to copy packets so that packets can be delivered to addresses according to both forwarding rules. Further management structures may be added. The routing device improves security in a network.

## Description

The invention relates to a routing device, a network for handling data packets, a method of forwarding data packets using a routing device and a system for forwarding a plurality of data packets.

### Background

Electronic information is transmitted around networks as data packets, typically constructed according to known standards which described the creation of payload and also identifying information, usually carried in a packet header. The destination address to which a data packet is ultimately to be transmitted is also included in the header. In order to arrive at its final destination a data packet is transmitted along a route in a network which is broken up into hops between devices. The devices, for example, can be routers. As a data packet arrives at each new device along its route its header is read in order to identify the destination address and the packet is forwarded to the next device along the route using a forwarding decision, typically read out of a routing table. The total route consists of the sum of all forwarded hops. Routing is the sum of all forwarding a packet goes through from source to destination across all network elements. Routing can be split into static routing and dynamic routing.

Static routing is a form of routing that occurs when a router uses a manually-configured routing entry, rather than information from a dynamic routing protocol to forward traffic. Typically, static routes may be manually configured by a network administrator who manually adds, or programs, entries into a routing table. As such the routing table is fixed, at least until updated.

An alternative is dynamic, or adaptive, routing in which routing tables are updated automatically by a system. This allows for routes provided for data packets through a system to be changed on the fly, in order to account for changes in local conditions.

Static routing and dynamic routing are not mutually exclusive and in fact both can be used by a particular router to maximise routing efficiency and to provide backups in the event that dynamic routing information fails to be exchanged.

The arrangement of a router is in general logically split into two components, the control plane and the forwarding plane, the latter sometimes referred to as the data plane. In this arrangement processes which control routing protocols are contained in the control plane and the processing and forwarding of packets is undertaken by the forwarding plane. A routing engine performs protocol updates and system management and maintains the routing tables, and the primary forwarding table which connects to a packet forwarding engine which performs forwarding operations. A forwarding table is received from the routing engine through an internal link. As each packet is processed at the router it is forwarded according to the forwarding table.

However, the typical router arrangement, while it secures delivery of a data packet to the intended destination address, offers only limited management functions for the handling of data packets. While many data packets are routine and do not compromise network or individual security in any way, all are handled in the same manner. However, while the vast majority of data packets are routine and need only be delivered to their intended destination some packets may compromise either individual or network security.

Meanwhile, many network operators in diverse legal jurisdictions are required to perform legal intercept of data packets. While this is a legal requirement it frequently poses a technical problem. The amount of data transmitted by network is increasingly large, yet there are few reliable methods allowing for targeted intercept of data packets, particularly unopened data packets. One possibility is to perform intercept of every single data packet which passes through a network. This provides reliability, in the sense that no data packets are lost from intercept, but requires a large amount of compute (CPU cycles) or computation, memory and storage to handle and process all the data packets correctly. Since compute and memory is costly it is an expensive method of providing for legal intercept. Further, because all data packets are caught but clearly not all data packets will be the intended focus of legal intercept, this method results in the capture of far more data packets than need be intercepted. Moreover, as this process is in line of the traffic, this action will have a performance impact on the network throughput, and will decrease the throughput, or speed, of the network.

It is a problem to allow for efficient legal intercept of data packets..

### Summary

A solution to the problem is provided by a routing device, for forwarding a plurality of data packets, and comprising a first management structure for forwarding the plurality of data packets via a first set of forwarding rules and a second management structure for forwarding the plurality of data packets via a second set of forwarding rules. The routing device is arranged to receive a data packet for forwarding, and forward the data packet according to both the first and second forwarding rules.

In an embodiment the management structure is typically the control plane, or management plane, or other management organisation system or management arrangement, of the router and may be physically located with or alongside the physical routing functionality of the routing device, or may be physically separated from it performing management from a distance. Therefore the router described, in comprising two management structures, offers two control planes, or, two control mechanisms for routing data packets. The first management structure comprises, or has access to, a set of forwarding rules for forwarding a plurality of data packets. The forwarding rules can also be understood or referred to as forwarding choices and typically these forwarding choices are written and/or stored according to known methods. A forwarding choice is the information used by the router to determine how to forward a data packet onwards in order for it to be delivered, ultimately, to its intended destination address. Such forwarding choices are usually programmed dynamically by the network, but can also be inputted manually. In an embodiment the forwarding choice or rule comprises a port number corresponding to the router port through which the data packet must leave the router in order to be forwarded onwards for the next hop in its route through the network.

Therefore a data packet arriving at the router can be forwarded on to a next subsequent router according to the information comprised in the first set of forwarding rules. However, the second management structure also comprises, or has access to, a set of forwarding rules for forwarding the plurality of data packets. Therefore a data packet which arrives at the router can be forwarded according to a first forwarding rule, which may allow it to arrive at a first destination address, but can also be forwarded according to a second forwarding rule.

Therefore a packet can be delivered to two separate addresses and this allows an improved handling of data packets because it allows for data packets which may be dangerous or which may compromise individual or network security, or which may be part of, or an constituent part of, an overall file or transmission which may compromise individual or network security, to be transmitted on to a destination address at which they can be analysed and/or read.

In an embodiment the router can be used in anti-hacking management and can provide an alternative to passive 'sniffing' of data packets sent to or from end-points and persons of interest. By sending to a further address all or some data packets connected with or associated with particular network end-points a signature of attack can be effectively analysed. In a specific embodiment all data traffic originating at a network address suspected of involvement with hacking, or other suspicious activities, could be sent to a destination address where they can be read and analysed.

In a particular embodiment the router provides an efficient method of carrying out intercept, and in particular legal intercept, of data packets because it allows for packets intended for a specific destination, or from a specific source, to be transmitted also to an alternative destination. Transmission to an alternative destination means transmission to an alternative final destination, and initially means transmission to an alternative port.

In particular, not all data packets need be sent to addresses according to both a first and second forwarding rules. Either the first and/or second management structure can comprise forwarding rules which include null entries. In a typical embodiment, one or other of the two management structures will comprise forwarding rules for all data packets but the other may comprise forwarding rules for only some data packets, typically those which may be of interest. This allows the network to avoid capturing all data packets which travel through it. In particular, since data packets are now handled according to forwarding rules, which can be updated either automatically or manually, logic can now be applied to the handling of data packets. In particular, not all data packets need be sent to a second address.

This therefore allows the network, or the management of the network, or the management of the router, an efficient means to improve security.

The router can be used in any form of network in which data packets must be delivered to destination addresses. In a particular embodiment the router is arranged to uses the Internet Protocol (IP).

Therefore the router allows for improved management and security of a network and the data packets which are transmitted within it.

In an embodiment the first management structure comprises a first forwarding table for storing a first set of forwarding rules, and the second management structure comprises a second forwarding table for storing a second set of forwarding rules. The first management structure is arranged to forward the data packet according to a respective forwarding rule in the first forwarding table and the second management structure is arranged to forward the data packet according to a respective forwarding rule in the second forwarding table. This allows the two sets of forwarding rules to be stored separately or independently from each other which has the advantage that either can be managed or updated independently of the other.

In an alternative embodiment the routing device comprises a forwarding table for storing both the first set of forwarding rules and the second set of forwarding rules. Here the first management structure is arranged to forward the data packet according to a respective forwarding rule from the first set of forwarding rules, and the second management structure is arranged to forward the data packet according to a respective forwarding rule from the second set of forwarding rules. In this embodiment the forwarding rules, or forwarding information, can be stored in the same forwarding table. This has the advantage that two sets of forwarding information can be stored in the same table and therefore managed efficiently.

In an embodiment one or more ports are exclusively used for, or dedicated to, forwarding packets of the second forwarding rule. In a further embodiment there may be a further network attached to these ports, or in other words, the dedicated ports lead to a further network. The network attached to these ports will receive the data packets forwarded according to the second forwarding rule. Once received in the further network these packets can be used for additional, further or a second use and without this additional use interfering with the delivery of the data packets to their original destinations according to the first set of forwarding rules. The additional, further or second use can be, for example, analysis, efficient storage, back-up or archiving.

In an embodiment the router comprises a plurality of ports, through which data packets may be received and/or further transmitted on the basis of forwarding rules. In a typical embodiment the router may both receive and transmit data packets through the same ports because usually all ports can be both incoming and outgoing ports, although this is not necessary. Typically the router is arranged to receive a data packet through a port, and send the data packet to a port for further transmission, where the port is defined by a respective forwarding rule.

In an embodiment the routing device comprises a splitter and is arranged to copy an incoming data packet using the splitter. A splitter is a device which simply doubles a signal and transmits it on another line, therefore in a simple embodiment a data packet arriving at the router can be copied using a splitter, or other copying device, and may therefore be delivered to addresses according to both forwarding rules. The routing device forwards the data packet according to either the first or second forwarding rule, and forwards the copied data packet according to the other respective forwarding rule. In further embodiments other known methods of copying data packets can be used to provide a second data packet.

In the embodiment in which one or other of the first or second management structures comprises null entries, in other words some data packets are only transmitted on to their originally intended destination, not all data packets need be copied by the splitter or other copying method and therefore an energy efficient method of improving security in a network.

In an embodiment any data packet not forwarded will be dropped.

In an embodiment the routing device comprises a buffer, and is arranged to receive a data packet in the buffer, retrieve a data packet from the buffer, and forward the data packet according to either or both the first and second forwarding rules.

In embodiments the buffer and splitter can be combined.

Inclusion of a buffer allows the data packets to be stored either before or after copying or to be stored before transmission according to either the first or second forwarding rule. For example, typical ports may allow data packets to be transmitted at speeds of any of 1 Mbit/s, 10 Mbit/s, 100 Mbit/s, 1 Gb/s, 10 Gb/s,....,Gb/s. If for example data packets may be transmitted according to one or other of the two management choices and may be transmitted onto a line with a low capacity, then data packets may be stored first in a buffer prior to forwarding.

In specific embodiments the buffer may be in front of, or before, the splitter in a particular data packet route through the router. In specific embodiments there may be a splitter but no buffer, a splitter in front of 2 buffers in parallel, or a splitter after a first buffer. In embodiments there can be more than one buffer. In embodiments there can also be more than one splitter.

In an embodiment the forwarding according to either the first or second set of forwarding rules may be based on either source address of the data packet or destination address of the data packet and this may be achieved according to any known method.

In an embodiment the routing device comprises a first processor, or processing device, or computing device, comprising the first management structure and a second processor, or processing device, or computing device, comprising the second management structure. This allows for both management structures to be kept separately from each other and maintained separately, for example by separate users. In an embodiment the processor is comprised of a CPU, memory and input/output device.

In an alternative embodiment the routing device may comprise a processor comprising one of either the first or second management structure and some form of input/output device, for example an input/output module or connector or interface, via which the forwarding choices in the other respective management structure can be accessed. In this way one or either of the management structures may be kept outside the router and the forwarding rules only accessed by the router, for example when particular packets with specific attributes are detected by the router. Again, this allows for both management structures to be kept separate and allows them to be maintained separately. In this particular embodiment the two management structures can be physically situated in separate locations.

In an embodiment the management structure is controlled by a management module with a user interface. The user interface can be an API application programmable interface or a GUI (Graphical User Interface) or a command line interface. In a typical embodiment a user, wishing to use the user interface to enable, check, or use management module functions, would first authenticate themselves by performing some form of authentication, typically by entering a user identify or ID and password. Against a database this is then checked, and the credentials determined, defining what the particular user is authorised to do. Examples of what a particular user may be able to do include read or read only data, and/or delete data, and/or write data, and/or update data. In this manner a user is able to perform any combination of reading, writing, updating, deleting, adding, removing, amending, copying entries of a first set of forwarding choices while another user is able is able to also perform any combination of reading, writing, updating, deleting, adding, removing, amending, copying entries of a second set of forwarding choices, and both users are able to perform these tasks completely independent of each-other. A user in this case can be a person, a legal person, an administrator, a system administrator, or an entity or organisation managing or controlling one set of forwarding choices. The data of these two users are completely separated from each other and therefore different organisations are able to manage data traffic independently form each other and as a result each only knows their own forwarding choices and not the forwarding choice of the other.

In a further embodiment there can be more than two such management structures and therefore more than two such users. In an alternative embodiment there may be three or more management structures but one user or entity controls and manages two of them, while a second user or entity manages a third. Other organizational combinations are possible.

In an embodiment particular users, generally known as Administrators, or performing the role of Administrator, are able to create new identities consisting of username or user ID /password combinations and a specific authorization level, and/or change the authorization level of existing users, and/or add delete users. Data includes, for example forwarding choices or forwarding rules. In an embodiment other routers or computers or applications can also have an ID and password. In an embodiment passwords are encrypted, for example using public and private keys.

In an embodiment for managing the forwarding table and/or managing the forwarding choices through the use of forwarding rules the user has access to management module via an interface which may be a graphical interface, for example a Web based GUI, or and API (for an application) and can input, edit, control and manage rules for a set of forwarding choices. The GUI may be a Graphical user interface allowing the user to create, read, update and delete routing information. In a particular embodiment the result will be that a forwarding table can be made for data packets based on source IP address of the respective data packet or destination IP address of the respective data packet.

Although the interface may be comprised on the router itself, the user may access the interface from elsewhere in the network of which the router is a part, or may be situated outside the network, and coupled to it to allow remote control of the router or of the management structures within the router. The interface may be coupled via a dedicated line, or via a VPN (Virtual private Network). Therefore in one embodiment, one of the first or second management structures may be managed from outside the network itself.

In an embodiment the two management structures and the two routing tables can be managed independently of each other. In an embodiment routing entries can be managed by different persons independently of each other.

In an embodiment there is a third management structure with a third set of forwarding rules. In fact any number of management policies with any number of forwarding rules can be applied to a router.

In a particular embodiment one forwarding table is managed dynamically and the other forwarding table is managed statically. In a particular embodiment both are managed independently of each other.

Routing information can also be received from another router via a network connection, for example using the BGP protocol.

In an embodiment the first management structure can be managed manually using the graphical user interface, while the second management structure can be managed via the network interface using BGP protocol.

In an embodiment the routing device is arranged to acknowledge the routing of a data packet according to only one of the first or second forwarding rules. In this way any data packet transmitted to a further address in addition to the originally intended destination need not be acknowledged, thus saving the sender of such data packets from being alerted.

The invention also relates to a network for handling data packets comprising a routing device, for forwarding a plurality of data packets to a plurality of network addresses, wherein the routing device comprises a first management structure for routing a plurality of data packets via a first set of forwarding rules and a second management structure for routing a plurality of data packets via a second set of forwarding rules and wherein the routing device is arranged to receive a data packet for forwarding, and control and forward the data packets according to both the first and second management structures. The network further comprises a user interface for accessing either the first or second management structures and controlling the respective first or second forwarding rules.

In an embodiment only one router according to the arrangement is comprised in the network, and this allows one point in the network at which data packets can be redirected to a second address in addition to the originally intended destination address of the data packet. In a typical embodiment the router according to the arrangement may be situated in the last or first router position in a network, or in a central position, for example at the centre of a star network.

The invention also relates to a method of forwarding data packets using a routing device, the method comprises receiving a data packet, accessing a first management structure comprising information for forwarding a plurality of data packets via a first set of forwarding rules, accessing a second management structure comprising information for forwarding a plurality of data packets via a second set of forwarding rules, forwarding the data packet according to both the first and second forwarding rules.

In a further embodiment the method further comprises copying a received data packet, forwarding the data packet according to the information in either the first or second management structure, and forwarding the copied data packet according to the information in the other respective management structure.

In a further embodiment the method also comprising storing one of either the data packet or copy in a buffer before forwarding it according to either the first or second management structure respectively.

In a further embodiment any data packet forwarded according to the second management structure is not acknowledged. In an alternative embodiment any data packet forwarded according to the first management structure is not acknowledged.

The invention also relates to a computer product for a processor arranged to perform the method of receiving a data packet, accessing a first management structure comprising information for routing a plurality of data packets via a first set of forwarding rules, accessing a second management structure comprising information for routing a plurality of data packets via a second set of forwarding rules, and routing the data packet according to both the first and second forwarding rules. The processor is suitable for use within a router, or within a network comprising routers.

The invention also relates to a system for forwarding a plurality of data packets, the system comprising a first management structure comprising a first set of forwarding rules for forwarding a plurality of data packets and a second management structure comprising a second set of forwarding rules for forwarding the plurality of data packets and further a routing device coupled to the first and second management structures. The routing device is arranged to receive a data packet for forwarding, and is further arranged to forward the data packet according to both the first and second forwarding rules comprised in the first and second management structures.

The system allows for management of the routing and forwarding of data packets and the management of forwarding choices or forwarding rules, to be fully split from the forwarding of the data packets and for management plane to be removed from the routing device leaving only the forwarding plane sited within the routing device itself. This arrangement therefore allows for a distributed system, in other words a network comprising forwarding devices, to perform the physical forwarding of data packets, and a separate control or management structure or management plane. The forwarding devices may comprise routers, forwarders, or some other forwarding plane in physical form. This therefore allows for a fully centralised management within a network wherein the management of routing or forwarding choices is organized centrally and forwarding instructions are either sent out to, updated to or read out to routers, forwarders or forwarding plane which listen to or otherwise gain access to the information as needed. The information is exchanged via interfaces.

In a specific embodiment the management plane comprises rules for forwarding and these are copied into a forwarding table, or alternatively forwarding tables, situated in the routing device. Therefore in a specific embodiment the routing device may comprise only forwarding tables and ports and management is performed outside the routing device.

Therefore a very specific embodiment concerns a routing device, for forwarding a plurality of data packets, and comprising a first set of forwarding rules and a second set of forwarding rules. The routing device is arranged to receive a data packet for forwarding, and then forward the data packet according to both the first and second forwarding rules.

In an embodiment the system can comprise more than one such routing device. In fact a centralised management plane can control any number of routing devices which operate as nodes within a network. This allows a centralised management structure to control routing according to two different sets of routing plans, or forwarding choices, throughout a network.

The invention allows a simple arrangement and method by which data packets in a network can be copied for storage or possibly analysis.

The invention allows for the management of the security of a network and the data packets transmitted within it.

The invention can be used to copy certain packets that the network, or a network manager, does not wish to lose, but without having to copy and store every data packet transmitted by the network.

The invention provides for Smart management of data packets within a network.

In a further embodiment the invention provides for selective duplication of packets to a separate network.

The invention also allows for storage of packets for use or inspection at a later time.

The invention also allows for deep packet inspection, DPI. DPI is a technique whereby the payload of a data packet is investigated before the data packets is handled further and will typically be performed to improve the quality of service or to discriminate between types of traffic, allowing them to be handled in separate ways. A DPI is performed in an element, for example an in-line element, in the network. DPI may also be used in legal intercept to examine the contents of a data packet. A drawback of DPI is that it has a huge impact on the throughput of the network, and requires considerable hardware and software to process the traffic. In an embodiment of the invention a data packet is selected for forwarding according to second forwarding rules and DPI is performed on the data packet forwarded according to the second forwarding rule whilst the data packet forwarded according to the first forwarding rule is routed and eventually delivered to the address included in the header of the data packet as it was originally released onto the network.

In an embodiment of DPI a data packet is selected for DPI according to first or second forwarding rules and a backup or copy of the data packet is made, according to the invention, and put on the network again for delivery to the original address incorporated in the header of the data packet. The data packet selected is then subjected to DPI to investigate the contents of the data packet.

In an embodiment the DPI system is managed by the network itself, and no special arrangements are made to allow external entities or persons have access.

The invention provides a simple, cheap and fast way of allowing legal copying, or intercept, of data within a network.

The invention provides an arrangement and method by which a second form of management decisions can be applied to data packets which travel via a particular router.

The invention provides a simple, cheap and fast way of applying different management policies to data packets which are transmitted via a particular router.

These and other embodiments are described further in the figures.

### Figures

Figure 1 shows a router arrangement according to the prior art.
Figure 2a shows an embodiment of the invention.
Figure 2b shows an alternative embodiment of the invention.
Figure 2c shows an alternative embodiment of the invention.
Figure 2d shows an alternative embodiment of the invention.

### Detailed Description

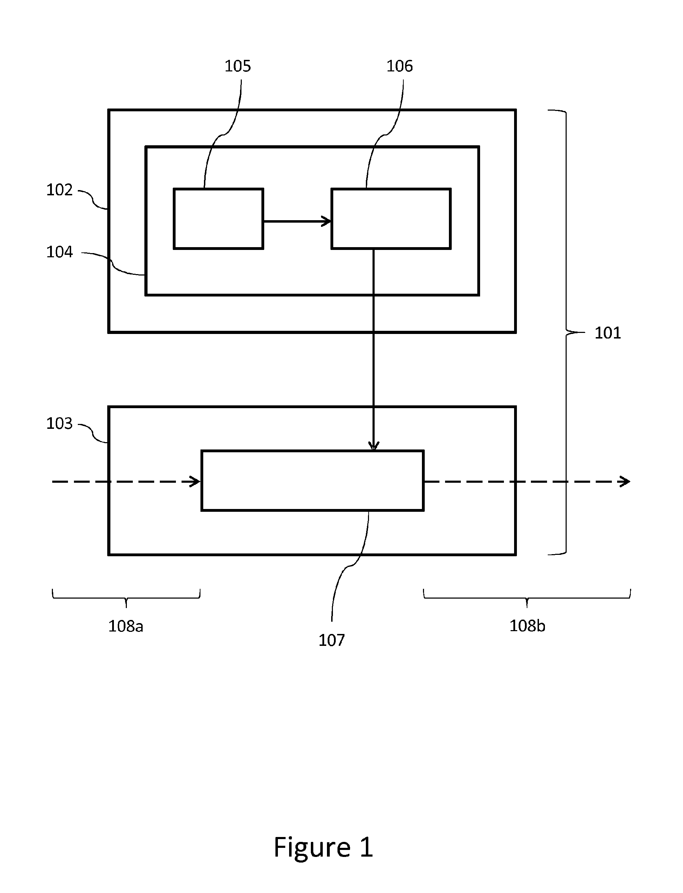

Figure 1 shows a router arrangement according to the prior art. A router 101 can be functionally split into a control plane 102 and a forwarding plane, or data plane, 103. Control plane 102 comprises a routing engine 104 which includes a routing table 105 and a forwarding table 106. Information in the routing table 105 is used to construct the forwarding table 106 which typically describes the port number in the router by which a specific data packet is transmitted onwards in view of the ultimate destination address included in the packet header. Information from the forwarding table 105 is used by a packet forwarding engine 107 in the forwarding plane 103 to physically send a particular packet onwards from the router into its next hop. In practise a data packet enters 108a the router, typically via a port, is forwarded by the packet forwarding engine 107 and thereby leaves 108b the router via a port. The ports by which the data packet arrives at and leaves the router are usually different, but that is not necessary.

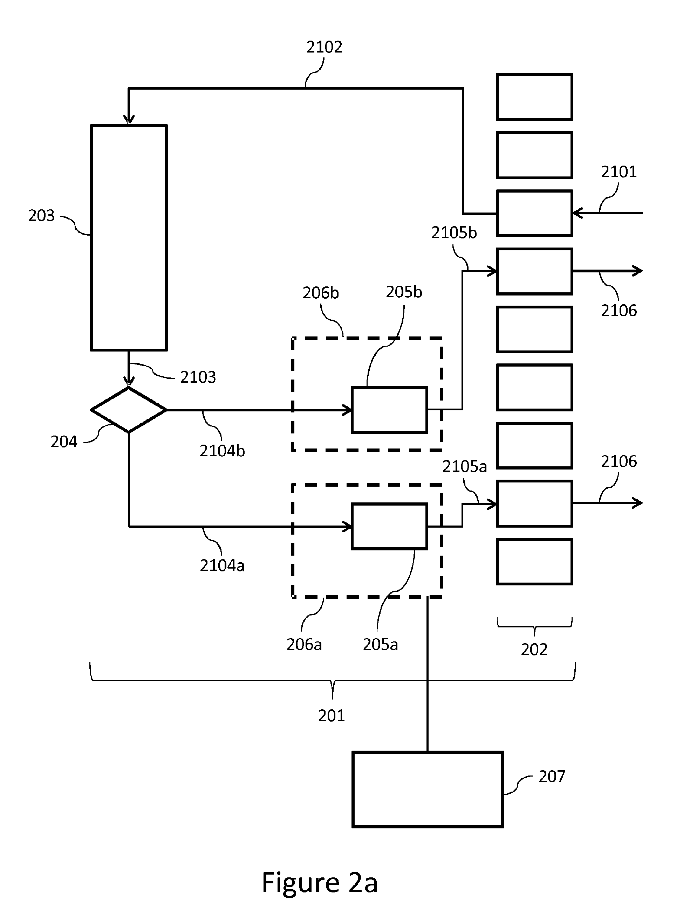

Figure 2a shows an embodiment of the invention. Router 201 comprises ports 202, a buffer 203, a splitter 204 and a first forwarding table 205a and a second forwarding table 205b. First forwarding table 205a may be comprised in first management structure 206a. Second forwarding table 205b may be comprised in second management structure 206b. One or both of either first or second management structures 206a, 206b may be controlled or managed by an interface 207. In this particular instance interface 207 is shown as being arranged to control first management structure 206a, but in an alternative embodiment it could be coupled to second management structure 206b instead and be used to control second management structure 206b, or, in a further embodiment, could be coupled to both first management structure 206a and second management structure 206b and be used to control both. The interface module 207 consists of a database containing authentication and authorization module, as well as an interface for input/output like an API or GUI or command line interface.

A data packet enters 2101 via a port 202 and is passed 2102 into buffer 203 where it is saved until it can be passed 2103 to splitter 204, copied and passed 2104a, 2104b to first management structure 206a which applies a forwarding choice from first forwarding table 205a, and second management structure 206b, respectively, which applies a forwarding choice from second forwarding table 205b. Each packet, either the original or copy, is directed 2105a, 2105b onto an appropriate outgoing port 202 according to the forwarding choices in either the first or second forwarding table 205a, 205b respectively. Each packet then leaves 2106 the router for its respective onward journey.

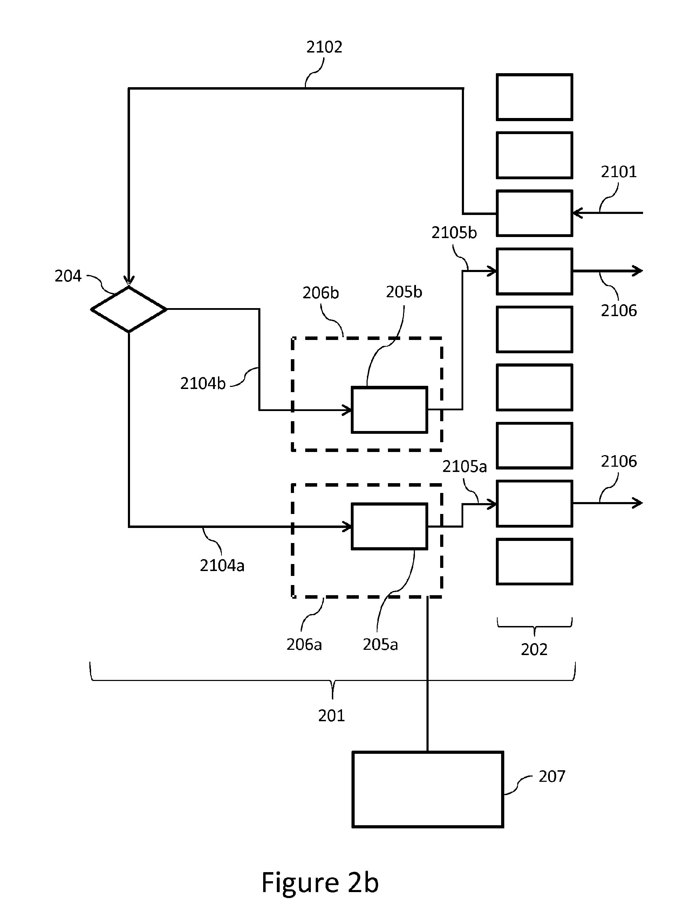

Figure 2b shows an embodiment of the invention. Router 201 comprises ports 202, a splitter 204 and a first forwarding table 205a and a second forwarding table 205b. First forwarding table 205a may be comprised in first management structure 206a. Second forwarding table 205b may be comprised in second management structure 206b. One or both of either first or second management structures 206a, 206b may be controlled or managed by an interface 207. In this particular instance interface 207 is shown as being arranged to control first management structure 206a, but in an alternative embodiment it could be coupled to second management structure 206b instead and be used to control second management structure 206b, or, in a further embodiment, could be coupled to both first management structure 206a and second management structure 206b and be used to control both.

A data packet enters 2101 via a port 202 and is passed 2102 into splitter 204 where it is copied and passed 2104a, 2104b to first management structure 206a which applies a forwarding choice from first forwarding table 205a, and second management structure 206b, respectively, which applies a forwarding choice from second forwarding table 205b. Each packet, either the original or copy, is directed 2105a, 2105b onto an appropriate outgoing port 202 according to the forwarding choices in either the first or second forwarding table 205a, 205b respectively. Each packet then leaves 2106 the router for its respective onward journey.

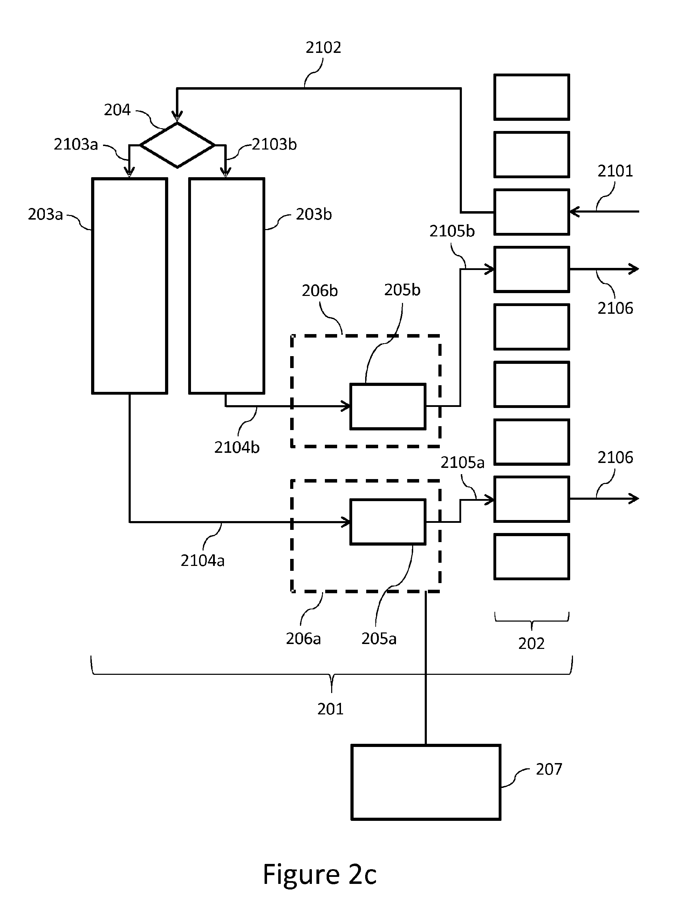

Figure 2c shows an embodiment of the invention. Router 201 comprises ports 202, a splitter 204, a first buffer 203a, a second buffer 203b, and a first forwarding table 205a and a second forwarding table 205b. First forwarding table 205a may be comprised in first management structure 206a. Second forwarding table 205b may be comprised in second management structure 206b. One or both of either first or second management structures 206a, 206b may be controlled or managed by an interface 207. In this particular instance interface 207 is shown as being arranged to control first management structure 206a, but in an alternative embodiment it could be coupled to second management structure 206b instead and be used to control second management structure 206b, or, in a further embodiment, could be coupled to both first management structure 206a and second management structure 206b and be used to control both.

A data packet enters 2101 via a port 202 and is passed 2102 into splitter 204 where it is copied and passed 2103a, 2103b to buffers 203a, 203b for storage. After storage either or both data packets are passed 2104a, 2104b to first management structure 206a which applies a forwarding choice from first forwarding table 205a, and second management structure 206b, respectively, which applies a forwarding choice from second forwarding table 205b. Each packet, either the original or copy, is directed 2105a, 2105b onto an appropriate outgoing port 202 according to the forwarding choices in either the first or second forwarding table 205a, 205b respectively. Each packet then leaves 2106 the router for its respective onward journey.

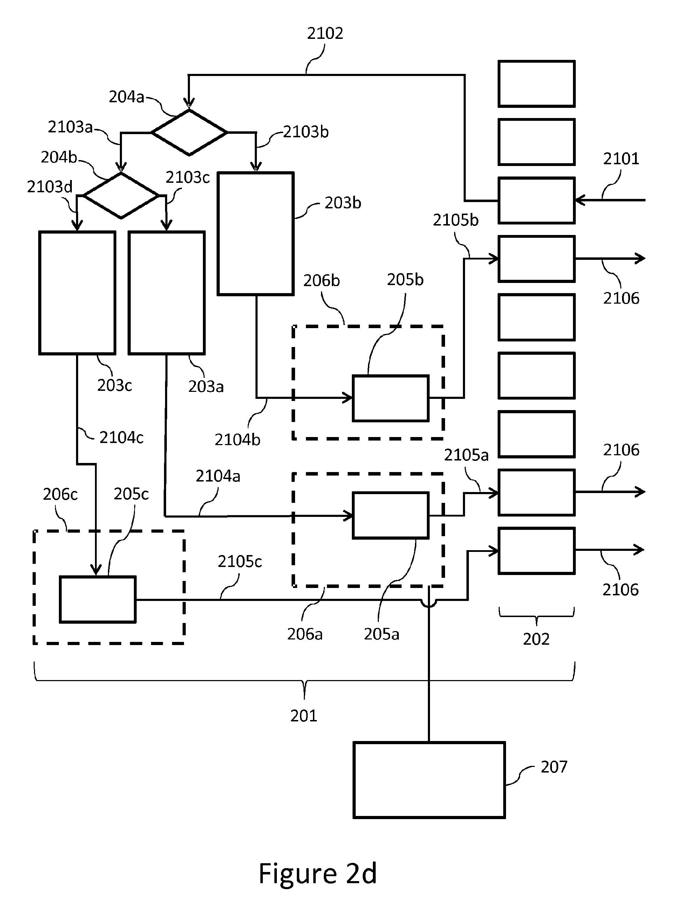

Figure 2d shows an embodiment of the invention in which more than two management structures are comprised in the router. In this example three management structures are comprised in the router but there could be four, or five, or more. Here, router 201 comprises ports 202, a first splitter 204a, and a second splitter 204b, and three buffers 203a, 203b, 203c.

A data packet enters 2101 via a port 202 and is passed 2102 to first splitter 204a where it is copied and passed 2103a to second splitter 204b and passed 2103b to buffer 203b for storage. At splitter 204b it is further copied again and passed 2103c, 2103d to buffers 203a and 203c. This arrangement allows copies of an original data packet to be passed to three management structures 206a, 206b, 206c, each comprising respectively a forwarding table 205a, 205b, 205c which allows each respective management structure to apply a forwarding choice and forward the data packet via a respective port 202.

One or both of either first or second management structures 206a, 206b may be controlled or managed by an interface 207. In this particular instance interface 207 is shown as being arranged to control first management structure 206a, but in an alternative embodiment it could be coupled to either or both of second management structure 206b and third management structure 206c instead and be used to control second management structure 206b or third management structure 206c or any combination of all three management structures 206a, 206b, 206c.

In embodiments all ports can be both incoming and outgoing ports, receiving and sending, typically, IP packets at various rates per second (1, 10 100 Mbit/s, 1, 10,....Gb/s) depending on the port speed.

## Claims

1. A routing device 101, for forwarding a plurality of data packets, and comprising:
- a first management structure 206a for forwarding the plurality of data packets via a first set of forwarding rules;
- a second management structure 206b for forwarding the plurality of data packets via a second set of forwarding rules;
the routing device arranged to:
- receive a data packet for forwarding, and
- forward the data packet according to both the first and second forwarding rules.

2. The routing device of claim 1 wherein:
- the first management structure 206a comprises a first forwarding table 205a for storing a first set of forwarding rules, and
- the second management structure 206b comprises a second forwarding table 205b for storing a second set of forwarding rules, and wherein:
- the first management structure 206a is arranged to forward the data packet according to a respective forwarding rule in the first forwarding table 205a; and
- the second management structure 206b is arranged to forward the data packet according to a respective forwarding rule in the second forwarding table 205b.

3. The routing device of claim 1 further comprising:
- a forwarding table 205a for storing both:
- the first set of forwarding rules, and
- the second set of forwarding rules,
and wherein:
- the first management structure 206a is arranged to forward the data packet according to a respective forwarding rule from the first set of forwarding rules, and
- the second management structure 206b is arranged to forward the data packet according to a respective forwarding rule from the second set of forwarding rules.

4. The routing device of any of claim 1, 2 or 3 further comprising:
- a plurality of ports 202 for receiving the data packets;
- a plurality of ports 202, through which the data packets are further transmitted on the basis of forwarding rules;
and wherein the router is arranged to:
- receive a data packet through a port 202, and
- send the data packet to a port 202 for further transmission, where the port 202 is defined by a respective forwarding rule.

5. The routing device of any previous claim further comprising:
- a splitter 204; and wherein the router is arranged to:
- copy an incoming data packet using the splitter 204;
- forward the data packet according to either the first or second forwarding rule, and
- forward the copied data packet according to the other respective forwarding rule.

6. The routing device of any previous claim further comprising:
- a buffer 203, and wherein the routing device is arranged to:
- receive a data packet in the buffer 203;
- retrieve a data packet from the buffer 203;
- forward the data packet according to either or both the first and second forwarding rules.

7. The routing device of any previous claim,
where forwarding according to either the first or second set of forwarding rules is based on either
- source address of the data packet, or
- destination address of the data packet.

8. The routing device of any previous claim further comprising:
- a first processor comprising the first management structure 206a; and
- a second processor comprising the second management structure 206b.

9. The routing device of any of claims 1-7 comprising:
- a processor comprising one of either the first or second management structure 206a, 206b; and
- an input/output interface via which the forwarding rules in the other respective management structure can be accessed.

10. The routing device of any previous claim further arranged to acknowledge the routing of a data packet according to only one of the first or second forwarding rules.

11. A network for handling data packets comprising:
- a routing device 101, for forwarding a plurality of data packets to a plurality of network addresses, and comprising:
- a first management structure 206a for routing a plurality of data packets via a first set of forwarding rules;
- a second management structure 206b for routing a plurality of data packets via a second set of forwarding rules;
the routing device arranged to:
- receive a data packet for forwarding;
- control and forward the data packets according to both the first and second management structures 206a, 206b; and
- a user interface 207 for accessing either the first or second management structures 206a, 206b and controlling the respective first or second forwarding rules.

12. A method of forwarding data packets using a routing device, the method comprising:
- receiving a data packet 2101;
- accessing 2104a a first management structure comprising information for forwarding a plurality of data packets via a first set of forwarding rules;
- accessing 2104b a second management structure comprising information for forwarding a plurality of data packets via a second set of forwarding rules;
- forwarding 2106 the data packet according to both the first and second forwarding rules.

13. The method according to claim 12 further comprising:
- copying a received data packet;
- forwarding 2106 the data packet according to the information in either the first or second management structure, and
- forwarding 2106 the copied data packet according to the information in the other respective management structure.

14. The method of claim 13 further comprising:
- storing one of either the data packet or copy in a buffer 203 before forwarding it 2106 according to either the first or second management structure respectively.

15. The method of claim 12 or 13 wherein any data packet forwarded according to the second management structure is not acknowledged.

16. A system for forwarding a plurality of data packets, and comprising:
- a first management structure comprising a first set of forwarding rules for forwarding a plurality of data packets;
- a second management structure comprising a second set of forwarding rules for forwarding the plurality of data packets;
- a routing device coupled to the first and second management structures;
and wherein the routing device is arranged to:
- receive a data packet for forwarding, and
- forward the data packet according to both the first and second forwarding rules comprised in the first and second management structures.
